# FASCICULE DE BREVET EUROPEEN

(11) **EP 0 915 606 B1**
(45) Date de publication et mention de la délivrance du brevet: **15.08.2007**
(21) Numéro de dépôt: 98402377.0
(22) Date de dépôt: 28.09.1998
(51) Int. Cl.: H04M 1/57

(54) **Procédé de recherche d'un numéro de téléphone dans un répertoire mémorisé dans un récepteur téléphonique.**
Verfahren zum Aufsuchen einer Telefonnummer in einem Verzeichnis, welches in einem Telefonempfänger gespeichert ist
Method of search of a telephone number in a directory stored in a telephone receiver

(30) Priorité: 10.11.1997 FR 9714102
(43) Date de publication de la demande: 12.05.1999
(73) Titulaire: Alcatel Lucent, 75008 Paris (FR)
(72) Inventeur: Boero, Philippe, 75003 Paris (FR); Zawadzki, Alexandre, 92130 Issy les Moulineaux (FR)
(74) Mandataire: Korakis-Ménager, Sophie

(56) Documents cités:
- EP-A- 0 494 525
- EP-A- 0 501 903
- EP-A- 0 624 966
- DE-A- 4 016 188
- US-A- 5 546 447

## Description

La présente invention concerne un procédé de recherche d'un numéro de téléphone dans un répertoire téléphonique situé dans une mémoire électronique. L'invention trouve une application pour les terminaux téléphoniques qu'ils soient mobiles tels les terminaux mobiles de type GSM (*Global System for Mobiles*)*,* ou fixes.

Lors d'un appel entrant sur un terminal téléphonique, celui-ci peut proposer comme service d'afficher le nom de l'appelant plutôt que son numéro de téléphone.

À cette fin, le terminal téléphonique peut posséder dans une mémoire électronique un répertoire téléphonique lui permettant de mettre en correspondance les numéros de téléphone avec le nom de l'abonné.

Il existe déjà des procédés permettant d'effectuer cette mise en correspondance de façon rapide.

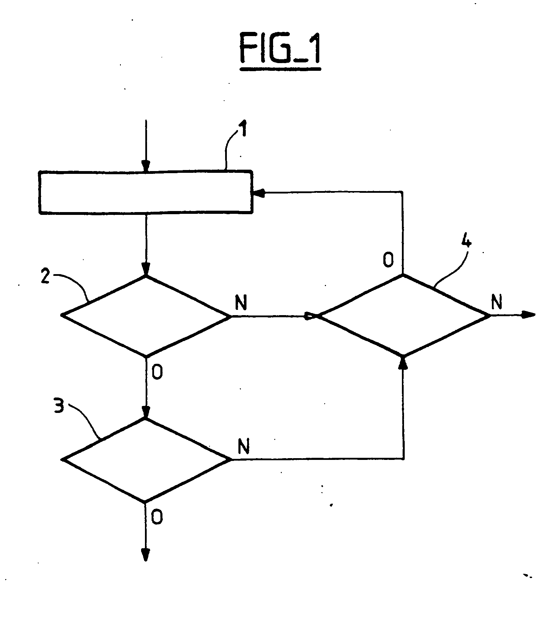

Par exemple, un procédé particulier est illustré par la figure 1. Son principe est d'effectuer la comparaison entre le numéro de l'appelant et chacun des numéros stockés dans le répertoire en deux étapes afin d'optimiser le temps de recherche.

À cet effet, on considère qu'un numéro de téléphone est constitué de trois parties : un suffixe, une partie centrale et un préfixe. La séparation entre la partie centrale et le suffixe est arbitraire. On peut par exemple considérer que le préfixe est formé des 4 derniers chiffres tandis que la partie centrale est constitué des suivants. On peut aussi considérer que le suffixe est de taille nulle, ce qui revient à ne considérer que deux parties : le préfixe et la partie centrale.

Le préfixe, quant à lui, est formé des chiffres d'en-tête qui sont propres aux considérations internationales ou régionales.

Selon le procédé de l'état de la technique, un premier numéro est choisi dans le répertoire téléphonique à l'étape référencée 1 dans la figure 1. Une première comparaison est ensuite effectuée à l'étape référencée 2, basée sur les suffixes des deux numéros à comparer (i.e. le numéro de l'appelant et le numéro précédemment choisi).

En cas d'échec de la comparaison, l'étape référencée 4 est exécutée afin de déterminer s'il existe dans le répertoire téléphonique des numéros de téléphone qui n'ont pas encore été choisis. S'il en existe le procédé boucle sur l'étape 1 de choix du numéro, sinon, il stoppe sur un échec.

En cas de succès de la comparaison des deux suffixes, une seconde comparaison est effectuée sur la partie centrale et le suffixe (étape référencée 3 sur la figure 1). En cas d'échec de cette dernière comparaison, l'étape référencée 4 est exécutée, comme précédemment. En cas de succès, le procédé s'arrête avec comme résultat le dernier numéro choisi.

La façon dont les numéros sont choisis à l'étape 1 du procédé est indifférente. Il peut s'agir par exemple d'un choix séquentiel dans le répertoire téléphonique.

Toutefois, ce procédé selon l'état de la technique est insuffisant du fait de la multiplicité des préfixes possibles pour un même numéro d'abonné. En effet, il n'existe à ce jour aucune norme ou standard pour ces préfixes, et leur contenu varie pour un même numéro en fonction des réseaux de télécommunication.

Par exemple, un abonné, résidant en Italie, possède un terminal téléphonique portable ayant comme numéro « 01xxxxxxxx ». Ce même abonné, se rendant en France, appelle un autre abonné et présente comme numéro « 01xxxxxxxx ».

Si « +391xxxxxxxx » est le numéro contenu dans le répertoire de cet autre abonné (39 étant le code international de l'Italie), le procédé selon l'état de la technique sera incapable de le retrouver à la réception du numéro « 01xxxxxxxx ».

La présente invention a donc pour but de résoudre le problème posé par les multiples préfixes d'un numéro de téléphone.

Pour cela, l'invention a pour objet un procédé selon la revendication 1 de recherche d'un numéro optimal parmi les numéros stockés dans un répertoire inhérent à un récepteur téléphonique en fonction du numéro d'un appel entrant sur ce récepteur téléphonique

Les caractéristiques de la présente invention apparaîtront de façon plus claire dans la description qui va suivre en liaison avec les figures annexées.
La figure 1, déjà décrite, illustre un procédé de recherche d'un numéro de téléphone dans un répertoire selon l'état de la technique.
La figure 2, illustre le procédé conforme à la présente invention.

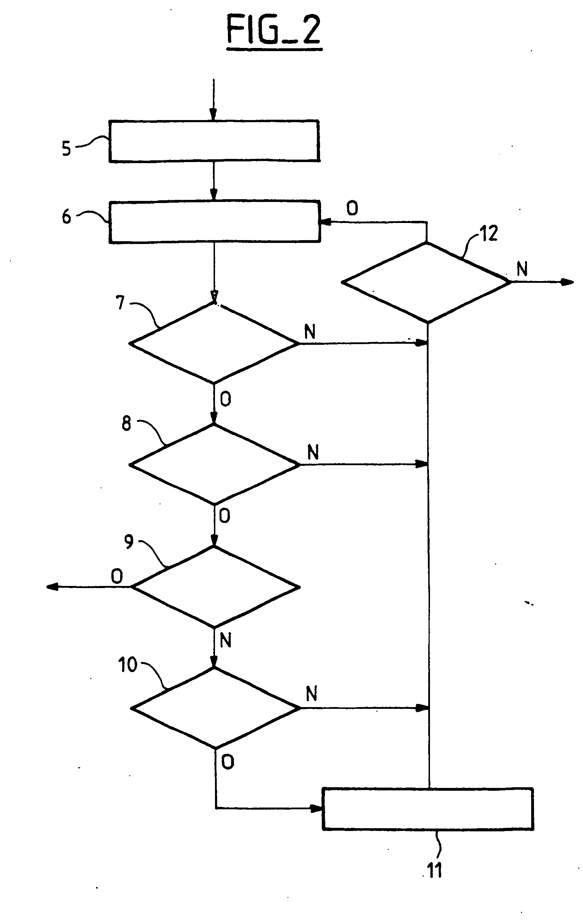

L'étape référencée 5 sur la figure 2 consiste à initialiser une variable qui sera appelée longueur significative optimale (Lᵣ) par la suite à la valeur nulle. Le rôle de cette variable est de mesurer la qualité de la meilleure solution trouvée au bout d'un certain nombre d'itérations. Plus la valeur de la longueur significative optimale est élevée, meilleure est la solution trouvée.

L'étape référencée 6 consiste à choisir un numéro courant parmi les numéros stockées dans le répertoire téléphonique. Cette étape est similaire à celle référencée 1 sur la figure 1. Ici aussi, il peut s'agir d'un choix selon l'ordre de stockage dans le répertoire.

L'étape référencée 7 consiste à effectuer une comparaison entre le suffixe du numéro courant et le suffixe du numéro de l'appel entrant. Cette comparaison est, elle-aussi, similaire à celle référencée 2 sur la figure 1. La taille du suffixe peut par exemple être de 4, mais il est à noter qu'elle peut aussi être nulle de sorte que cette étape soit confondu avec la suivante.

En cas d'échec de cette comparaison (i.e. les deux suffixes sont différents), le procédé revient à l'étape 6, c'est-à-dire au choix d'un nouveau numéro courant dans le répertoire.

En cas de succès de la comparaison, le procédé, l'étape référencée 8 est effectuée. Elle consiste à effectuer une comparaison entre le numéro courant et le numéro de l'appel entrant en se basant sur la longueur significative minimale, c'est-à-dire à la valeur minimale entre la longueur significative du numéro de l'appel entrant et la longueur significative du numéro courant.

De la même façon que précédemment, en cas d'échec de la comparaison, le procédé revient à l'étape 6 du choix d'un nouveau numéro courant dans le répertoire.

L'étape suivante est l'étape référencée 9 sur la figure 2. Elle consiste à comparer la longueur significative du numéro de l'appel entrant avec la longueur significative du numéro courant. Si ces deux longueurs sont identiques, il est inutile, quoique non gênant, de poursuivre la recherche car il est impossible de trouver un numéro plus optimal parmi ceux stockés dans le répertoire. Par conséquent, selon une mise en oeuvre préférentielle du procédé selon l'invention, la recherche est stoppée lorsque les deux longueurs significatives ont des valeurs identiques.

Dans le cas contraire, on procède à une comparaison (référencée 10) entre la longueur significative optimale (Lᵣ) et la longueur significative minimale (Lₘᵢₙ), ces deux longueurs étant définies précédemment.

Si Lᵣ est inférieur à Lₘᵢₙ alors, dans une étape référencée 11, on mémorise le numéro courant en tant que numéro optimal et on affecte à la longueur significative optimale (Lᵣ) la valeur de la longueur significative minimale (Lₘᵢₙ). Autrement dit, on considère le numéro courant comme la meilleure solution trouvée jusqu'à l'itération actuelle.

L'étape 12 consiste à tester si la totalité du répertoire a été testée. S'il existe encore des numéros non testés, alors l'algorithme boucle sur l'étape 6 du choix d'un numéro courant.

Si non, l'algorithme se termine avec, comme solution, le numéro optimal précédemment mémorisé s'il existe.

## Revendications

1. Procédé de recherche d'un numéro optimal parmi les numéros stockés dans un répertoire inhérent à un récepteur téléphonique en fonction du numéro d'un appel entrant sur ledit récepteur téléphonique, **caractérisé en ce qu'**il consiste à initialiser une variable appelée longueur optimale (Lᵣ) à la valeur nulle, et à itérer les étapes ordonnées suivantes pour tous les numéros stockés dans ledit répertoire
a) choix d'un numéro de téléphone courant dans ledit répertoire,
b) comparaison des suffixes dudit numéro de l'appel entrant et dudit numéro courant, le suffixe d'un numéro étant une partie du numéro considérée à partir de l'arrière du numéro,
c)en cas de succès de ladite comparaison est effectuée sur la longueur significative minimale (Lₘᵢₙ) calculée entre longueur significative dudit numéro de l'appel entrant (Lₐₑ) et la longueur significative dudit numéro courant (Lᵣₑₚ), la longueur étant considérée à partir de l'arrière, entre ledit numéro de l'appel entrant (Lₐₑ)et ledit numéro courant (Lᵣₑₚ),
d) en cas de succès de ladite seconde comparaison, une troisième comparaison est effectuée entre ladite longueur significative dudit numéro de l'appel entrant (L_{ac})et ladite longueur significative dudit numéro courant (Lᵣₑₚ).
e) en cas de succès de ladite troisième comparaison, le numéro courant est mémorisé en tant que numéro optimal,
f) en cas d'échec de ladite troisième comparaison, si ladite longueur optimale (Lᵣ) est inférieure à ladite longueur significative minimale (Lₘᵢₙ), alors ledit numéro courant est mémorisé en tant que numéro optimal, et ladite longueur [significative] optimale prend la valeur de ladite longueur significative minimale.

2. Procédé selon la revendication précédente, **caractérisé en ce qu'**en cas de succès de ladite troisième comparaison, la recherche s'arrête avec, comme résultat, le numéro courant.

## Claims

1. A method of looking up among numbers stored in a directory of a telephone receiver a number that is optimal given the calling party number of an incoming call to said telephone receiver, **characterised in that** it consists in initialising a variable referred to as the optimal length Lᵣ to the value zero and iterating the following ordered steps for all the numbers stored in said directory:
a) choosing a current telephone number in said directory,
b) comparing suffixes of said incoming calling party number and said current number,
c) if said comparison succeeds, effecting a second comparison with the minimal significant length Lₘᵢₙ calculated between the significant length of said incoming calling party number Lₐₑ and the significant length of said current number Lᵣₑₚ, the length being considered from behind, between said incoming calling party number Lₐₑ and said current number Lᵣₑₚ,
d) if said second comparison succeeds, effecting a third comparison between said significant length of said incoming calling party number Lₐₑ and said significant length of said current number Lᵣₑₚ,
e) if said third comparison succeeds, storing the current number in memory as said optimal number,
f) if said third comparison fails and if said optimal length Lᵣ is less than said minimal significant length Lₘᵢₙ, storing said current number in memory as an optimal number and assigning the value of said minimal significant length to said optimal length.

2. A method according to the previous claim, **characterised in that** if said third comparison succeeds said search terminates with the current number as its result.

## Patentansprüche

1. Verfahren zum Aufsuchen einer optimalen Telefonnummer aus den Nummern, die in einern zum Telefonempfänger gehörenden Verzeichnis gespeichert sind, und zwar in Abhängigkeit von der Nummer eines auf diesem Telefonempfänger ankommenden Anrufs, **dadurch gekennzeichnet, dass** es darin besteht eine Variable, die als optimale signifikante Lange (Lᵣ) bezeichnet wird, mit dem Wert Null zu initialisieren und die folgenden geordneten Schritte für alle in diesem Verzeichnis gespeicherten Nummer zu wiederholen:
a) Wahl einer aktuellen Telefonnummer aus diesem Verzeichnis,
b) Vergleich der Suffixe dieser Nummer des ankommenden Anrufs und dieser aktuellen Nummer, wobei das Suffix einer Nummer ein Teil der Nummer ist, und zwar von hinten an der Nummer ausgehend, betrachtet,
c) ist dieser Vergleich erfolgreich, so wird ein zweiter Vergleich hinsichtlich der minimalen signifikanten Länge Lₘᵢₙ durchgeführt, berechnet zwischen der signifikanten Länge dieser Nummer des ankommenden Anrufs L_{ac} und der signifikanten Länge dieser aktuellen Nummer Lᵣₑₚ, wobei die Länge von hinten ausgehend zwischen dieser Nummer des ankommenden Anrufs L_{ac} und dieser aktuellen Nummer Lᵣₑₚ betrachtet wird,
d) ist dieser zweite Vergleich erfolgreich, wird ein dritten Vergleich durchgeführt zwischen dieser signifikanten Länge dieser Nummer des ankommenden Anrufs L_{ac} und dieser signifikanten Länge dieser aktuellen Nummer Lᵣₑₚ,
e) ist dieser dritte Vergleich erfolgreich, wird die aktuelle Nummer als optimale Nummer gespeichert,
f) falls dieser dritte Vergleich misslingt und diese optimale Längs Lᵣ kleiner ist als diese minimale signifikante Länge Lₘᵢₙ, dann wird diese aktuelle Nummer als optimale Nummer gespeichert und diese optimale Länge nimmt den Wert dieser minimalen signifikanten Länge an.

2. Verfahren gemäß dem vorstehenden Anspruch, **dadurch gekennzeichnet, dass** bei einern erfolgreichen dritten Vergleich die Suche mit der aktuellen als Ergebnis endet.
